# EUROPEAN PATENT APPLICATION

(11) **EP 4 797 563 A1**
(43) Date of publication of application: **26.08.2026**
(21) Application number: 24887769.8
(22) Date of filing: 24.10.2024
(51) Int. Cl.: H04B 7/185

(54) **COMMUNICATION METHOD, COMMUNICATION APPARATUS, AND COMMUNICATION DEVICE**

(30) Priority: 10.11.2023 CN 202311501083
(71) Applicant: HUAWEI TECHNOLOGIES CO., LTD., Shenzhen, Guangdong 518129 (CN)
(72) Inventor: HAN, Xiaojiang, Shenzhen, Guangdong 518129 (CN); CHEN, Qucai, Shenzhen, Guangdong 518129 (CN); ZHAO, Zhixiang, Shenzhen, Guangdong 518129 (CN); MAO, Jianpeng, Shenzhen, Guangdong 518129 (CN)
(74) Representative: Grünecker Patent- und Rechtsanwälte PartG mbB
(86) International application number: PCT/CN2024/127174
(87) International publication number: WO 2025/098156

(57) **Abstract**

A communication method, a communication apparatus, and a communication device are provided. In the method, a terrestrial access network device adjusts a sending moment of target data based on a feeding transmission delay determined in real time, or a satellite adjusts a beam position switching moment of a beam based on the feeding transmission delay determined in real time, so that an occasion on which the target data arrives at the satellite matches the beam position switching moment of the beam of the satellite, to enable a target terminal within coverage of a first beam position and a second beam position to completely and accurately receive data sent by a terrestrial base station.

## Description

### CROSS-REFERENCE TO RELATED APPLICATIONS

This application claims priority to Chinese Patent Application No. 202311501083.8, filed with the China National Intellectual Property Administration on November 10, 2023 and entitled "COMMUNICATION METHOD, COMMUNICATION APPARATUS, AND COMMUNICATION DEVICE", which is incorporated herein by reference in its entirety.

### TECHNICAL FIELD

This application relates to the field of communication technologies, and in particular, to a communication method, a communication apparatus, and a communication device.

### BACKGROUND

In the field of non-terrestrial network (non-terrestrial network, NTN) communication, transmission devices on airborne or spaceborne platforms are usually used as relay nodes to forward data sent by terrestrial base stations to terminals, and to forward data sent by terminals to terrestrial base stations. In an NTN communication network, a single satellite can provide extremely wide coverage, which may reach thousands or even tens of thousands of square kilometers, and a single beam may cover dozens or even thousands of square kilometers. Therefore, to support wide area coverage, hundreds or even thousands of beams usually need to be configured for a single satellite, which poses a great challenge to the satellite payload.

To alleviate the contradiction between a limited payload capacity of a single satellite and a requirement for wide coverage, a beam hopping technology may be used. Only a few beams (for example, dozens of beams) are configured for a single satellite, and the beams serve, in a time division manner, all terrestrial areas covered by the single satellite. A beam may perform beam position switching at a specified interval according to a specified rule, and different times correspond to different beam positions. In this way, one beam can serve a plurality of beam positions, thereby improving a cell coverage capability of the beam.

In a satellite communication system that supports beam hopping, when a terrestrial base station sends data to a target terminal, if the data from the terrestrial base station arrives at a satellite at a time when a related beam has already switched away from a beam position corresponding to a terrestrial area to which the target terminal belongs, or a related beam has not yet switched to a beam position corresponding to a terrestrial area to which the target terminal belongs, the target terminal cannot receive the complete data sent by the terrestrial base station, and cannot obtain correct data through parsing. Therefore, how to ensure that the target terminal receives the accurate and complete data sent by the terrestrial base station is an urgent problem to be resolved.

### SUMMARY

This application provides a communication method, a communication apparatus, and a communication device, so that in a satellite communication system that supports beam hopping, a target terminal can accurately and completely receive data sent by a terrestrial access network device.

According to a first aspect, a communication method is provided. The method may be performed by a terrestrial access network device or a chip, a chip system, or a circuit located in the terrestrial access network device. The method may be implemented through the following steps: predicting a sending moment for sending target data to a target terminal, and transmitting the target data to the target terminal through a target beam of a satellite when the sending moment arrives. The sending moment of the target data is determined based on a feeding transmission delay and a beam position switching moment of the target beam of the satellite. The feeding transmission delay is determined based on a distance between the terrestrial access network device and the satellite. The beam position switching moment is a time point at which the target beam is switched from a first beam position to a second beam position. The target terminal is located within the terrestrial area covered by the first beam position or the second beam position.

According to the communication method provided in this application, the terrestrial access network device may adjust the sending moment of the target data based on the feeding transmission delay that changes in real time and the beam position switching moment of the target beam of the satellite, and transmit the target data to the target terminal through the satellite at the sending moment of the target data, or send the target data to the satellite at the sending moment of the target data. If the target terminal is located within the terrestrial area covered by the first beam position, the terrestrial access network device may adjust the sending moment of the target data, so that a time at which the target data arrives at the satellite is before the beam position switching moment of the target beam. Therefore, the satellite can forward the target data to the target terminal within the coverage of the first beam position through the target beam, and the target terminal within the coverage of the first beam position can completely and accurately receive the data sent by the terrestrial base station. If the target terminal is located within the terrestrial area covered by the second beam position, the terrestrial access network device may adjust the sending moment of the target data, so that a time at which the target data arrives at the satellite is after the beam position switching moment of the target beam. In this way, the satellite can forward the target data to the target terminal within the coverage of the second beam position through the target beam, and the target terminal within the coverage of the second beam position can completely and accurately receive the data sent by the terrestrial base station. Through the foregoing process, an occasion on which the target data arrives at the satellite can match the beam position switching moment of the target beam of the satellite, so that the target terminal within coverage of the first beam position and the second beam position can completely and accurately receive data sent by the terrestrial base station, thereby improving communication performance of beam hopping communication.

In a possible implementation, the terrestrial access network device may determine the location of the satellite based on ephemeris information of the satellite, determine the distance between the terrestrial access network device and the satellite based on the location of the terrestrial access network device and the location of the satellite, and determine the feeding transmission delay based on the distance between the terrestrial access network device and the satellite.

In a possible implementation, the terrestrial access network device may schedule to-be-sent data in a specified scheduling slot. In a process of scheduling the to-be-sent data based on the specified scheduling slot, the terrestrial access network device may cache target data in the to-be-sent data, and transmit the target data to the satellite once the sending moment arrives.

According to the foregoing method, the terrestrial access network device first caches the target data before the sending moment of the target data arrives, so that it can be ensured that the target data is transmitted to the satellite at the sending moment of the target data.

In a possible implementation, the terrestrial access network device may adjust the scheduling slot for the to-be-sent data based on the sending moment, and transmit the target data to the satellite at the sending moment of the target data based on the adjusted scheduling slot.

Through the foregoing method, the terrestrial access network device adjusts the scheduling slot for the to-be-sent data, to ensure that the target data is transmitted to the satellite at the sending moment of the target data. In this method, the target data does not need to be cached. When a data volume of the to-be-sent data is relatively large, a large amount of cache space can be saved, and another function of the terrestrial access network device is not affected due to excessive cache occupation.

According to a second aspect, a communication method is provided. The method may be performed by a satellite, or a chip, a chip system, or a circuit located in a satellite. The satellite is configured to forward the target data sent by the terrestrial access network device to the target terminal. The method may be implemented through the following steps: predicting a beam position switching moment of a target beam of the satellite, and switching the target beam from a first beam position to a second beam position at the beam position switching moment. The beam position switching moment is determined based on the feeding transmission delay and the obtained sending moment at which the terrestrial access network device sends the target data to the target terminal. The feeding transmission delay is determined based on a distance between the terrestrial access network device and the satellite. The target terminal is located within a terrestrial area covered by the first beam position or the second beam position.

According to the communication method provided in this application, the satellite determines a moment at which the target data arrives at the satellite based on the feeding transmission delay and the sending moment of target data, and predicts a beam position switching moment of the target beam based on the moment at which the target data arrives at the satellite, so that the beam position switching moment of the target beam of the satellite can be adjusted in real time, and the occasion on which the target data arrives at the satellite matches the occasion on which the satellite beam is switched. If the target terminal is located within the terrestrial area covered by the first beam position, the satellite may adjust the beam position switching moment of the target beam until after the target data arrives at the satellite. When the target data arrives at the satellite, the target data may be sent to the target terminal within the coverage of the first beam position through the target beam, so that the target terminal within the coverage of the first beam position can completely and accurately receive the data sent by the terrestrial base station. If the target terminal is located within the terrestrial area covered by the second beam position, the satellite may adjust the beam position switching moment of the target beam to a time point before the target data arrives at the satellite, and the target beam is switched from the first beam position to the second beam position. When the target data arrives at the satellite, the target data may be sent to the target terminal within the coverage of the second beam position through the target beam, so that the target terminal within the coverage of the second beam position can completely and accurately receive the data sent by the terrestrial base station. Through the foregoing process, the target terminal within coverage of the first beam position and the second beam position can completely and accurately receive the data sent by the terrestrial access network device, thereby improving communication performance of beam hopping communication.

In a possible implementation, the satellite may adjust a beam position switching interval of the target beam of the satellite based on the beam position switching moment.

In a possible implementation, the satellite may determine the distance between the terrestrial access network device and the satellite based on the location of the terrestrial access network device and the location of the satellite, determine the distance between the satellite and the reference point based on the distance between the terrestrial access network device and the satellite, and determine the feeding transmission delay based on the distance between the satellite and a reference point. The reference point is located between the satellite and the terrestrial access network device, and the distance between the reference point and the terrestrial access network device is fixed. The beam position switching moment is determined based on the sending moment of the target data. The sending moment of the target data is a moment at which the terrestrial access network device sends the target data to the satellite. The sending moment is determined based on a static feeding delay obtained based on the distance between the reference point and the terrestrial access network device.

According to a third aspect, a communication apparatus is provided. The communication apparatus may include a module for performing any method provided in the foregoing first aspect.

According to a fourth aspect, a communication apparatus is provided. The communication apparatus may include a module for performing any method provided in the foregoing second aspect.

According to a fifth aspect, an embodiment of this application provides a communication device, including a memory and a processor. The memory stores a computer program executable on the processor. The computer program, when executed by the processor, causes the processor to implement any method provided in the first aspect.

According to a sixth aspect, an embodiment of this application provides a communication device, including a memory and a processor. The memory stores a computer program executable on the processor. The computer program, when executed by the processor, causes the processor to implement any method provided in the second aspect.

According to a seventh aspect, an embodiment of this application provides a communication system. The communication system may include a terrestrial access network device and a satellite. The terrestrial access network device may be configured to perform any method provided in the first aspect, and the satellite may be configured to perform any method provided in the second aspect.

According to an eighth aspect, an embodiment of this application provides a computer-readable storage medium. The computer-readable storage medium stores computer-executable instructions, and the computer-executable instructions are used to enable a computer to perform any method provided in the first aspect or the second aspect.

According to a ninth aspect, an embodiment of this application provides a computer program product, including computer-executable instructions. The computer-executable instructions are used to enable a computer to perform any method provided in the first aspect or the second aspect.

For technical effects that can be achieved in any one of the third aspect to the ninth aspect, reference may be made to descriptions of beneficial effects in the first aspect or the second aspect. Details are not described herein again.

### BRIEF DESCRIPTION OF DRAWINGS

FIG. 1 is a diagram of an application scenario according to an embodiment of this application;
FIG. 2 is a diagram of a communication system according to an embodiment of this application;
FIG. 3 is a diagram of another communication system according to an embodiment of this application;
FIG. 4 is a diagram of interaction between a terrestrial access network device and a satellite according to an embodiment of this application;
FIG. 5 is a diagram of a communication timing according to an embodiment of this application;
FIG. 6 is a diagram of another interaction between a terrestrial access network device and a satellite according to an embodiment of this application;
FIG. 7 is a diagram of beam position switching performed by a satellite according to an embodiment of this application;
FIG. 8 is a block diagram of a structure of a communication apparatus according to an embodiment of this application;
FIG. 9 is a block diagram of a structure of a communication apparatus according to an embodiment of this application;
FIG. 10 is a diagram of a structure of a communication device according to an embodiment of this application; and
FIG. 11 is a diagram of a structure of a communication device according to an embodiment of this application.

### DESCRIPTION OF EMBODIMENTS

To make objectives, technical solutions, and advantages of embodiments of this application clearer, embodiments of this application are described below in detail with reference to the accompanying drawings. Terms used in implementations of this application are merely intended to explain specific embodiments of this application, and are not intended to limit this application.

Before specific solutions provided in embodiments of this application are described, some terms in this application are explained and described, to facilitate understanding by a person skilled in the art, but not to limit the terms in this application.
(1) Non-terrestrial network (non-terrestrial network, NTN): A network in which a transmission device on an airborne aircraft or a spaceborne aircraft is used as a relay node or a base station.
(2) Beam hopping (beam hopping, BH): It means that a beam may switch a beam position at a specified interval according to a specified rule or pattern (pattern), and different times correspond to different beam positions, so that one beam can serve a plurality of beam positions, thereby improving a cell coverage capability of the beam. According to the beam hopping technology, a few beams can serve, in a time division manner, all terrestrial areas covered by a single satellite.

In embodiments of this application, "a plurality of" means two or more. In view of this, in embodiments of this application, "a plurality of" may also be understood as "at least two". "At least one" may be understood as one or more, for example, one, two, or more. For instance, including at least one means including one, two, or more, and there is no limitation on which is included. For example, including at least one of A, B, and C may mean including A, B, or C, A and B, A and C, B and C, or A, B, and C. A term "and/or" means an association relationship for describing associated objects and represents that three relationships may exist. For example, A and/or B may represent the following three cases: only A exists, both A and B exist, and only B exists. In addition, a character "/", unless otherwise specified, generally indicates an "or" relationship between a preceding associated object and a succeeding associated object.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects.

The communication method provided in embodiments of this application may be applied to the NTN communication field. In the NTN communication field, a transmission device on an airborne aircraft or a spaceborne aircraft is usually used as a relay node or a base station. Because the airborne aircraft or the spaceborne aircraft has an extensive service coverage capability and can reduce sensitivity to physical attacks and natural disasters, the non-terrestrial network can facilitate 5G services in areas that cannot be covered by terrestrial 5G network services, such as isolated or remote mountainous areas, aircraft, or ships, as well as areas with insufficient terrestrial 5G network services, such as suburban and rural areas, to improve and complement terrestrial network performance in a cost-effective manner.

The non-terrestrial network provides network services for a machine to machine (machine to machine, M2M) device, an Internet of Things (internet of things, IoT) device, or passengers on a mobile platform to ensure service availability anywhere, especially critical communication and future railway/sea/aeronautical communication, and provides efficient multicast/broadcast resources by transmitting data to network edge user terminals, to implement scalability of 5G networks. The mobile platform may be a passenger vehicle, an airplane, a ship, a high-speed train, a bus, or the like. Non-terrestrial network components in a 5G system can function in the following fields: transportation, public safety, media and entertainment, electronic health, energy, agriculture, finance, and automobile.

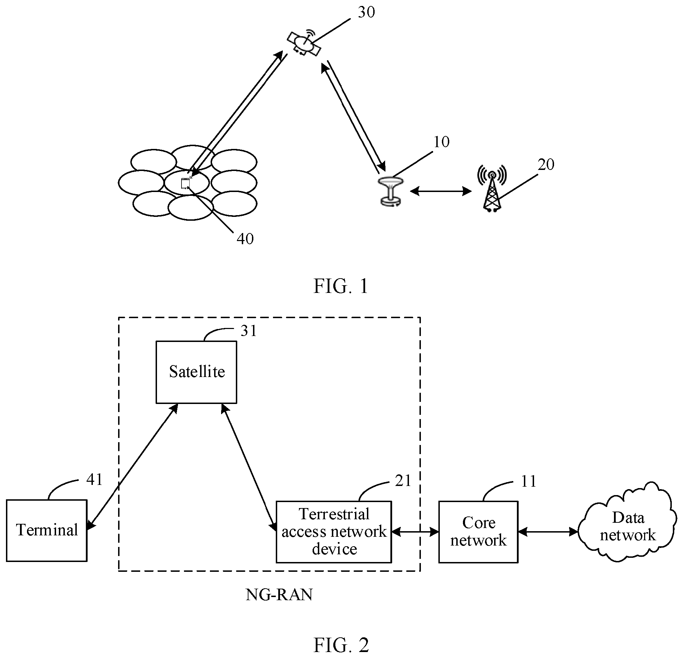

Non-terrestrial network communication using a transmission device on a spaceborne aircraft as a relay node or a base station may be referred to as satellite communication. The following uses the satellite communication as an example for description. A combination of the satellite communication and a 5G technology is a major trend. In the future, a 5G communication base station may be carried on a satellite, to provide high-speed communication services for terrestrial terminal users. FIG. 1 is diagram of a structure of a satellite communication network. As shown in FIG. 1, a gateway (gateway) 10 is connected to a terrestrial base station 20, a satellite 30 is connected to the gateway 10, and a signal of the terrestrial base station 20 is transmitted to the satellite 30 through the gateway 10. The gateway 30 may be an NTN gateway, and is responsible for sending the signal of the terrestrial base station 20 to the satellite 30. The terrestrial base station 20 and the gateway 10 may be collectively referred to as a terrestrial access network device. The satellite 30 is configured for signal relay or signal forwarding, that is, after receiving the signal from the terrestrial base station 20, the satellite 30 performs only radio frequency filtering, frequency conversion, and amplification, but does not perform data processing. The satellite 30 may forward the signal of the terrestrial base station 20 to a terminal 40 on the ground, and forward a signal sent by the terminal 40 to the terrestrial base station 20. A communication link between the satellite 30 and the terminal 40 may be referred to as a service link (service link), and a communication link between the satellite 30 and the terrestrial base station 20 may be referred to as a feeder link (feeder link).

The network architecture shown in FIG. 1 may be referred to as a transparent transmission network architecture (transparent satellite based NG-RAN architecture). In the transparent (transparent) transmission network architecture, a base station is still on the ground, and a satellite in the air only performs a signal forwarding function. Data sent by the terrestrial base station is transmitted to the terminal on the ground through the satellite.

Some communication networks further include a core network. As shown in FIG. 2, the communication network includes a core network (core network, CN) 11, a terrestrial access network device 21, a satellite 31, and a terminal 41. A gateway may be further disposed between the terrestrial access network device 21 and the satellite 31, and a unit including the terrestrial access network device 21 and the satellite 31 may be referred to as a new radio access network (NR-radio access network, NR-RAN). The communication network may include an interface between the core network 11 and the NG-RAN and an interface between the NG-RAN and the terminal 41.

The satellite 31 may alternatively be replaced by another aerial flying object. In the transparent transmission network architecture, the satellite is a relay node that forwards the signal of the terrestrial base station to the terminal on the ground.

The terrestrial access network device 21 may include a terrestrial base station and a gateway. The terrestrial base station may be understood as an apparatus that is deployed in a radio access network to provide a wireless communication function for a terminal. For example, the terrestrial base station may be an eNodeB or a base station (a gNodeB or a gNB) that meets a 5G standard. The gNB may include a macro base station, a micro base station (also referred to as a small cell), a relay station, an access point, a wearable device, and a vehicle-mounted device in various forms. The gNB may alternatively be a transmission and reception point (Transmission and Reception Point, TRP), or a transmission measurement function (Transmission measurement function, TMF). The gNB may include a central unit (Central unit, CU) and a distributed unit (Distributed unit, DU) that are integrated into the gNB.

The terminal 41 may alternatively be referred to as user equipment (user equipment, UE). The UE may include various handheld devices, vehicle-mounted devices, wearable devices, or computing devices that have a wireless communication function, or another processing device connected to a wireless modem. The UE may also be a mobile station (mobile station, MS), a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like.

The core network 11 may be a 5G core network. The core network 11 includes the following network elements: an access and mobility management function entity (access and mobility management function, AMF), a session management function entity (session management function, SMF), and a user plane function entity (user plane function, UPF). The core network 11 may include the following main functions: non-access stratum (non-access stratum, NAS) signaling security, access stratum security control, access authentication, access authorization, registration area management, and other mobility management functions.

The satellite network architectures shown in FIG. 1 and FIG. 2 are merely examples for description. The present invention is not limited to the satellite network architectures, and may be further applied to another NTN architecture or a new wireless network architecture emerging in future communication development.

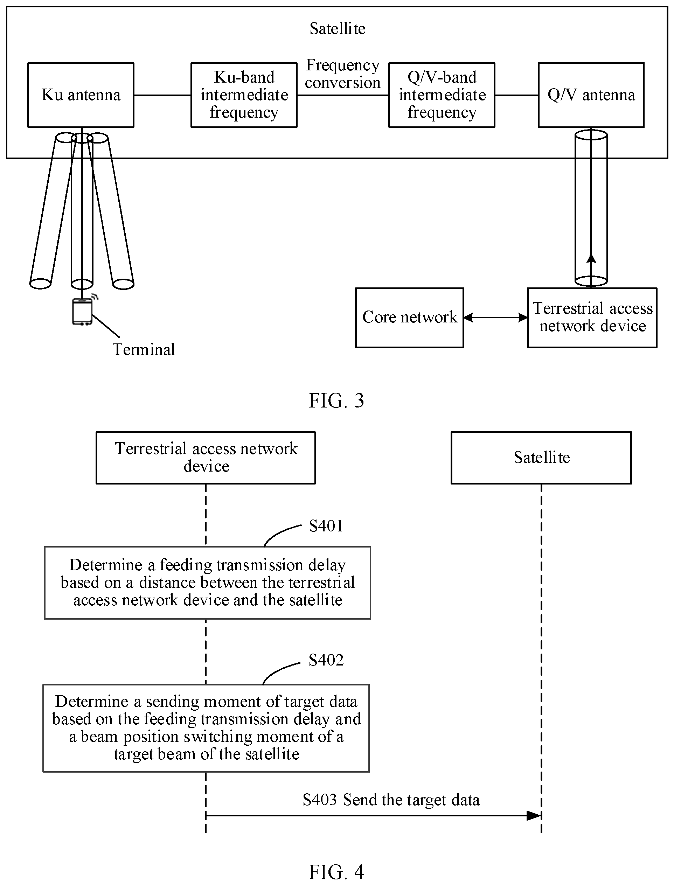

In the transparent transmission network architecture, the satellite functions to implement frequency conversion and radio frequency amplification, which is equivalent to an analog radio frequency repeater. Therefore, the satellite duplicates an NR Uu radio interface signal from a feeder link to a service link, and vice versa. As shown in FIG. 3, a Q/V-band antenna in a satellite receives, over a feeder link, data sent by a terrestrial access network device, and transmits the received data to a Q/V-band intermediate frequency module. After undergoing frequency conversion in the satellite, the received data is transmitted to a Ku-band intermediate frequency module, then transmitted to a Ku antenna through the Ku-band intermediate frequency module, and sent to a terminal on the terrestrial through a service link.

The satellite communicates with the terminal on the ground through a beam. Generally, a beam gazes at a beam position. For a satellite for which 64 beams are configured, the satellite can cover 64 beam positions, and coverage of the 64 beam positions is excessively limited. To expand the coverage of the satellite without increasing beams, a beam hopping technology may be used, so that a same beam corresponds to different beam positions at different times in a time division manner. Generally, beam hopping may be implemented in two manners. In one manner, the satellite scans a beam position at a fixed frequency, and a terrestrial base station schedules a user terminal at a corresponding beam position in a timely manner based on a frequency at which the satellite scans the beam position. In the other manner, a beam control link is established between a terrestrial base station and the satellite, the terrestrial base station sends a beam weight or beam indication information to the satellite in real time, and the satellite controls a beam direction in real time based on the indication information sent by the terrestrial base station. Both the two manners require synchronization between the terrestrial base station and the satellite, so that an occasion on which data arrives at the satellite matches an occasion on which a satellite beam is switched.

In the transparent transmission network architecture that supports the beam hopping, when the terrestrial access network device sends data to a target terminal, if the data arrives at a satellite from the terrestrial access network device when a related beam of the satellite has undergone beam position switching and left a beam position corresponding to a terrestrial area to which the target terminal belongs, or a related beam of the satellite has not undergone beam position switching and has not reached a beam position corresponding to a terrestrial area to which the target terminal belongs, the target terminal cannot completely receive the data sent by the terrestrial access network device, and therefore cannot obtain correct data through parsing.

Based on the above, embodiments of this application provide a communication method that can implement synchronization between the terrestrial access network device and the satellite. The communication method provided in embodiments of this application is described in detail below with reference to the accompanying drawings.

In some embodiments, the terrestrial access network device may dynamically adjust, based on a change of a distance between the terrestrial access network device and the satellite, a time for sending data, so that the terrestrial access network device is synchronized with the satellite. FIG. 4 is an example of a flowchart of interaction between a terrestrial access network device and a satellite. As shown in FIG. 4, the communication method may include the following steps.

S401: The terrestrial access network device determines a feeding transmission delay based on a distance between the terrestrial access network device and the satellite.

In this embodiment of this application, in consideration of a high-speed movement of the satellite, a length of a feeder link between the satellite and the terrestrial access network device also changes at a high speed during delay processing. A change in a length of the feeder link affects data transmission duration between the terrestrial access network device and the satellite, causing the data transmission duration between the terrestrial access network device and the satellite to continuously change. In this embodiment, the terrestrial access network device may determine the feeding transmission delay in real time based on the distance between the terrestrial access network device and the satellite. A change of the feeding transmission delay may reflect a change of the data transmission duration between the terrestrial access network device and the satellite.

For example, ephemeris information of the satellite is configured in the terrestrial access network device, and a location of the satellite may be determined in real time based on the ephemeris information of the satellite. The location of the satellite is a spatial location of the satellite, including an altitude of the satellite. The terrestrial access network device stores a location of the terrestrial access network device, and the distance between the terrestrial access network device and the satellite may be determined in real time based on the location of the terrestrial access network device and the location of the satellite. The terrestrial access network device may determine the feeding transmission delay based on a quotient obtained by dividing the distance between the terrestrial access network device and the satellite by a data transmission speed, where the data transmission speed is the speed of light. The feeding transmission delay is used to represent duration required for data to arrive at the satellite from the terrestrial access network device.

S402: The terrestrial access network device determines a sending moment of target data based on the feeding transmission delay and a beam position switching moment of a target beam of the satellite.

The target beam may be any one of a plurality of beams configured for the satellite. The beam position switching moment is a time point at which the beam of the satellite is switched from a first beam position to a second beam position. The target data is data sent by the terrestrial access network device to the target terminal, and the target terminal is located within a terrestrial area covered by the first beam position or the second beam position.

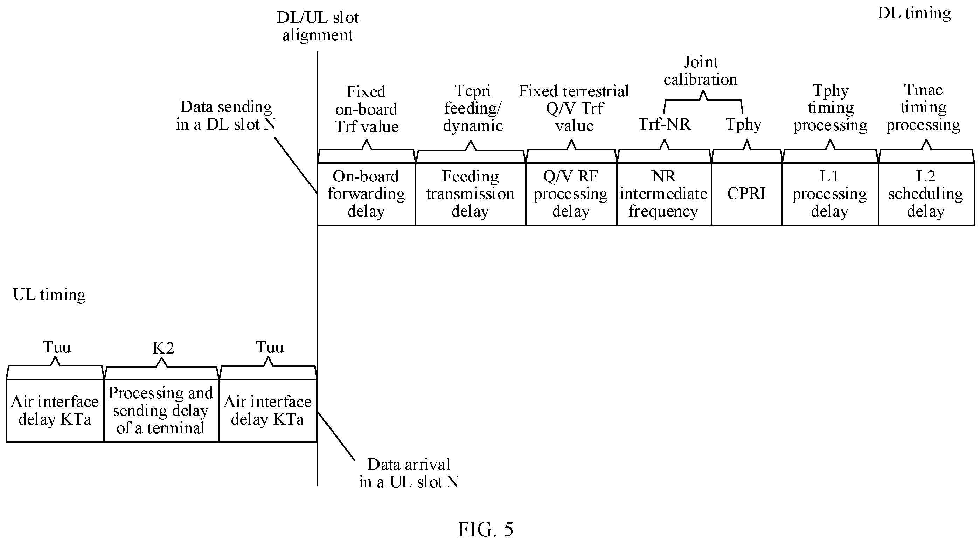

For example, as shown in FIG. 5, the terrestrial access network device may send data to each terminal in a downlink (downlink, DL) scheduling timing diagram. An example in which the target data is sent to the target terminal in the terrestrial area covered by the second beam position is used. Before sending the target data, the terrestrial access network device may separately determine the following information: an on-board forwarding delay, a feeding transmission delay, a Q/V radio frequency (radio frequency, RF) processing delay, an NR intermediate frequency, a common public radio interface (common public radio interface, CPRI), an L1 processing delay, and an L2 scheduling delay. Q/V refers to different bands. A Q-band antenna works in a band ranging from 12 GHz to 18 GHz, and a V-band antenna works in a band ranging from 30 MHz to 300 MHz. The on-board forwarding delay refers to duration for the satellite to forward data, that is, duration from a time when the satellite receives data through a receive antenna to a time when the satellite sends data through a transmit antenna. The on-board forwarding delay is also referred to as a fixed on-board Trf value. The feeding transmission delay is determined in step S401, and may be referred to as Tcpri feeding/dynamic. The Q/V RF processing delay refers to duration for processing data by a Q/V-band antenna of the terrestrial access network device, and may also be referred to as a fixed terrestrial Q/V Trf value. The NR intermediate frequency may also be referred to as Trf-NR, the CPRI may also be referred to as Tphy, and the Trf-NR and the Tphy may be referred to as joint calibration. The L1 processing delay may also be referred to as Tphy timing processing, and the L2 scheduling delay may also be referred to as Tmac timing processing.

A beam switching rule of the satellite is configured in the terrestrial access network device, or the terrestrial access network device may obtain the beam switching rule from the satellite. The beam switching rule may include a beam position switching moment of each beam of the satellite. As a remote module of the terrestrial access network device, the satellite may forward, to the target terminal, the target data sent by the terrestrial access network device to the target terminal. The terrestrial access network device may determine, based on the beam position switching moment of the beam of the satellite, the time point at which the beam of the satellite is switched from the first beam position to the second beam position, to determine a time point at which the satellite can send the target data. For example, as shown in FIG. 5, the transmit antenna of the satellite may perform data sending in an n^{th} DL slot (slot N), to send the target data. The terrestrial access network device may determine a sending moment T0 of the target data based on the determined information such as the on-board forwarding delay, the feeding transmission delay, the Q/V RF processing delay, the NR intermediate frequency, the CPRI, the L1 processing delay, and the L2 scheduling delay, and send the target data at the moment T0 before the DL slot N, to ensure that the satellite can send the target data in the DL slot N that matches the beam position switching moment.

In the DL slot N, the beam of the satellite is switched to the second beam position. In this case, uplink (uplink, UL) data sent by the target terminal also needs to arrive at the satellite. As shown in FIG. 5, an occasion of data sending in the DL slot N is aligned with an occasion of data arrival in a UL slot N. Similar to the terrestrial access network device, the target terminal may determine the following information: an air interface timing advance Ta of the terminal and a processing and sending delay K2 of the terminal. Ta=2Tuu=T1+Tm, where Tuu may be referred to as an air interface delay KTa or a UL grant (grant) air interface delay KTa, T1 may be determined based on ephemeris information of a satellite, and Tm may be determined based on a residual of signal measurement. The terminal may determine a time point UL slot N at which the satellite can receive the uplink data, and send the uplink data at a moment Tn before the UL slot N, to ensure that the satellite can receive the uplink data in the UL slot N, so that an occasion of data sending of the satellite in the DL slot N is aligned with an occasion of data arrival in the UL slot N.

S403: The terrestrial access network device sends the target data to the satellite.

The terrestrial access network device transmits the target data to the satellite at the sending moment of the target data.

In some embodiments, the terrestrial access network device may sequentially schedule to-be-sent data in a specified scheduling slot (slot), for example, schedules one piece of to-be-sent data in each slot, that is, outputs, in each slot, one piece of to-be-sent data to a sending queue of a radio frequency module of the terrestrial access network device for sending. In a process of scheduling the to-be-sent data, the target data in the to-be-sent data may be cached. For example, the target data may be cached in the radio frequency module, and is transmitted to the satellite once the sending moment arrives.

It may be understood that a shorter distance between the satellite and the terrestrial access network device indicates a shorter feeding transmission delay, so that the terrestrial access network device can send the target data later; and a longer distance between the satellite and the terrestrial access network device indicates a longer feeding transmission delay, so that the terrestrial access network device can send the target data earlier. At a point at which the satellite is farthest from the terrestrial access network device, the terrestrial access network device may send the target data in the specified scheduling slot, and does not need to cache the target data. A shorter distance between the satellite and the terrestrial access network device indicates a longer time for caching the target data by the terrestrial access network device.

In some other embodiments, the terrestrial access network device may adjust a scheduling slot for to-be-sent data based on the sending moment of the target data, and transmit, in an adjusted scheduling slot, the target data to the satellite at the sending moment of the target data. In other words, the terrestrial access network device may adjust the scheduling slot for the to-be-sent data based on the feeding transmission delay determined in real time, and transmit, in an adjusted scheduling slot, the target data to the satellite at the sending moment of the target data. For example, when the distance between the satellite and the terrestrial access network device gradually decreases, the terrestrial access network device may gradually extend a length of a scheduling slot, for example, gradually extend the length of the scheduling slot from 1.0 slot to 1.1 slots, 1.2 slots, 1.3 slots, or the like, so that the terrestrial access network device can schedule a next piece of to-be-sent data later. On the contrary, when the distance between the satellite and the terrestrial access network device gradually increases, the terrestrial access network device may gradually shorten the length of the scheduling slot, for example, gradually shorten the length of the scheduling slot from 1.3 slots to 1.0 slot, 0.9 slots, 0.8 slots, or the like, so that the terrestrial access network device can schedule a next piece of to-be-sent data earlier. The terrestrial access network device may adjust the scheduling slot in real time, to ensure that the target data is transmitted to the satellite at the sending moment of the target data.

In the foregoing embodiments, the terrestrial access network device may predict the sending moment at which the target data is sent to the target terminal, and transmit the target data to the target terminal through the target beam of the satellite when the sending moment arrives. The sending moment of the target data is determined based on the feeding transmission delay and the beam position switching moment of the target beam of the satellite. The feeding transmission delay is determined based on the distance between the terrestrial access network device and the satellite. The beam position switching moment is the time point at which the target beam is switched from the first beam position to the second beam position. The target terminal is located within the terrestrial area covered by the first beam position or the second beam position.

For example, if the target terminal is located within the terrestrial area covered by the first beam position, the terrestrial access network device may adjust the sending moment of the target data, so that a time at which the target data arrives at the satellite is before the beam position switching moment of the target beam. In this way, the satellite can forward the target data to the target terminal within the coverage of the first beam position through the target beam, and the target terminal within the coverage of the first beam position can completely and accurately receive the data sent by the terrestrial base station. If the target terminal is located within the terrestrial area covered by the second beam position, the terrestrial access network device may adjust the sending moment of the target data, so that a time at which the target data arrives at the satellite is after the beam position switching moment of the target beam. In this way, the satellite can forward the target data to the target terminal within the coverage of the second beam position through the target beam, and the target terminal within the coverage of the second beam position can completely and accurately receive the data sent by the terrestrial base station.

In the foregoing embodiments, the terrestrial access network device adjusts the sending moment of the target data based on the feeding transmission delay that changes in real time and the beam position switching moment of the beam of the satellite, and transmits the target data to the satellite at the sending moment of the target data, so that the occasion on which the target data arrives at the satellite matches the occasion on which the satellite beam is switched, to enable the target terminal within coverage of the first beam position and the second beam position to completely and accurately receive the data sent by the terrestrial access network device.

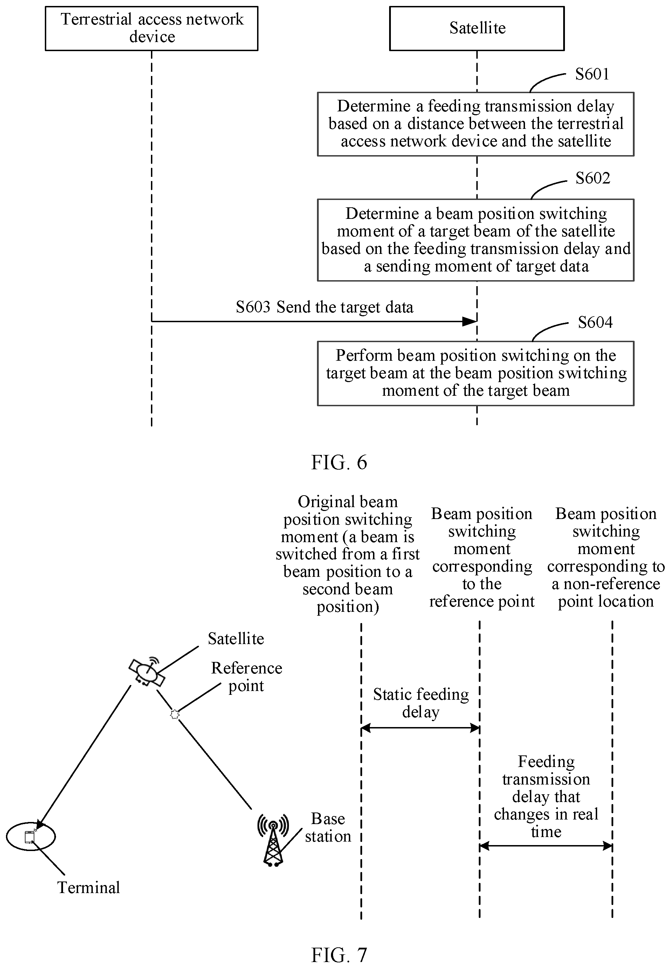

In some other embodiments, the satellite may dynamically adjust the beam position switching moment of the beam based on the change of the distance between the terrestrial access network device and the satellite, so that the terrestrial access network device is synchronized with the satellite. FIG. 6 is an example of a flowchart of interaction between a terrestrial access network device and a satellite. As shown in FIG. 6, the communication method may include the following steps.

S601: The satellite determines a feeding transmission delay based on a distance between the terrestrial access network device and the satellite.

The satellite stores a location of the terrestrial access network device, or the location of the terrestrial access network device may be obtained from the terrestrial access network device. The satellite can determine a location of the satellite in real time based on ephemeris information. The satellite may determine the distance between the terrestrial access network device and the satellite based on the location of the terrestrial access network device and the location of the satellite.

The satellite may determine the feeding transmission delay based on the distance between the terrestrial access network device and the satellite.

S602: The satellite determines a beam position switching moment of a target beam of the satellite based on the feeding transmission delay and a sending moment of target data.

The target data is data sent by the terrestrial access network device to a target terminal. The sending moment of the target data is a moment at which the terrestrial access network device sends the target data to the satellite. The sending moment of the target data may be notified by the terrestrial access network device to the satellite or preconfigured for the satellite. In other words, before the beam position switching moment of the target beam of the satellite is determined based on the feeding transmission delay and the sending moment of the target data, the satellite may first obtain the sending moment at which the terrestrial access network device sends the to-be-sent target data to the target terminal. The target terminal is located within a terrestrial area covered by a first beam position or a second beam position.

In an optional embodiment, as shown in FIG. 7, a reference point is disposed between the terrestrial access network device and the satellite, and a distance between the reference point and the terrestrial access network device is fixed. The sending moment of the target data is determined by the terrestrial access network device based on a static feeding delay obtained based on the distance between the reference point and the terrestrial access network device. For example, the terrestrial access network device may determine the static feeding delay based on the distance between the reference point and the terrestrial access network device, and then determine the sending moment of the target data based on the static feeding delay. Because the distance between the reference point and the terrestrial access network device is fixed, the static feeding delay is also fixed, and may be referred to as a fixed delay. For example, a location at which the satellite is closest to the terrestrial access network device may be used as the reference point. The satellite may determine a distance between the satellite and the reference point based on the distance between the terrestrial access network device and the satellite, and determine the feeding transmission delay based on the distance between the satellite and the reference point and a data transmission speed. When the satellite is closest to the terrestrial access network device, that is, when the satellite is located at the reference point, the feeding transmission delay is minimum, and a beam position switching moment at which the beam is switched from the first beam position to the second beam position may be related only to the static feeding delay. A longer distance between the satellite and the terrestrial access network device indicates a longer feeding transmission delay, and the beam position switching moment of the beam is related to both the static feeding delay and the feeding transmission delay.

The satellite may determine the beam position switching moment of the target beam of the satellite based on the feeding transmission delay and the sending moment of the target data. For example, the satellite may determine, based on the feeding transmission delay and the sending moment of the target data, a moment at which the target data arrives at the satellite. If the target terminal is located within the terrestrial area covered by the first beam position, the satellite may adjust the beam position switching moment of the target beam after the moment at which the target data arrives at the satellite. When the target data arrives at the satellite, the target data is sent to the target terminal within the coverage of the first beam position through the target beam, so that the target terminal within the coverage of the first beam position can completely and accurately receive the data sent by the terrestrial base station. If the target terminal is located within the terrestrial area covered by the second beam position, the satellite may adjust the beam position switching moment of the target beam before the moment at which the target data arrives at the satellite. The target beam is first switched from the first beam position to the second beam position. When the target data arrives at the satellite, the target data may be sent to the target terminal within the coverage of the second beam position through the target beam, so that the target terminal within the coverage of the second beam position can completely and accurately receive the data sent by the terrestrial base station.

S603: The terrestrial access network device sends the target data to the satellite.

The terrestrial access network device sends the target data to the satellite at the sending moment of the target data. The sending moment of the target data may be determined by the terrestrial access network device based on information such as an on-board forwarding delay, a static feeding delay, a Q/V RF processing delay, an NR intermediate frequency, a CPRI, an L1 processing delay, and an L2 scheduling delay. Because the static feeding delay is a fixed delay, the terrestrial access network device may send data to the satellite in a specified scheduling slot.

S604: The satellite performs beam position switching on the target beam at the beam position switching moment of the target beam.

The satellite may adjust a beam position switching interval of the target beam of the satellite based on the beam position switching moment. For example, the terrestrial access network device sends data to the satellite in the specified scheduling slot, for example, sends one piece of data to the satellite every 1 slot. When the distance between the satellite and the terrestrial access network device gradually decreases, the feeding transmission delay becomes shorter, and the data sent by the terrestrial access network device may arrive at the satellite more quickly. The satellite may gradually shorten the beam position switching interval, for example, gradually shorten the beam position switching interval from 1.0 slot to 0.9 slots, 0.8 slots, 0.7 slots, or the like, so that a beam position switching frequency becomes faster. On the contrary, when the distance between the satellite and the terrestrial access network device gradually increases, the feeding transmission delay becomes longer, and the satellite may gradually extend the beam position switching interval, for example, gradually extend the beam position switching interval from 0.7 slots to 1.0 slot, 1.1 slots, 1.2 slots, or the like, so that a beam position switching frequency becomes slower. Through the foregoing process, the satellite may adjust the beam position switching interval in real time, so that an occasion on which the target data arrives at the satellite matches an occasion on which the satellite beam is switched.

When the target terminal is located within the terrestrial area covered by the first beam position, steps S603 and S604 may be performed in sequence. If the target terminal is located within the terrestrial area covered by the second beam position, step S604 may be performed before step S603.

In the foregoing embodiments, the satellite is configured to forward, to the target terminal, the target data sent by the terrestrial access network device. The satellite may predict the beam position switching moment of the target beam, and switch the target beam from the first beam position to the second beam position at the beam position switching moment. The beam position switching moment is determined based on the feeding transmission delay and the sending moment of the target data. The sending moment is the moment at which the terrestrial access network device sends the target data to the satellite. The feeding transmission delay is determined based on the distance between the terrestrial access network device and the satellite. The target terminal is located within the terrestrial area covered by the second beam position.

In the foregoing embodiments, the satellite adjusts the beam position switching moment of the beam of the satellite in real time based on the feeding transmission delay that changes in real time, so that the occasion on which the target data arrives at the satellite matches the occasion on which the satellite beam is switched. After the target data arrives at the satellite, the beam of the satellite may be switched from the first beam position to the second beam position, so that the target terminal within the coverage of the second beam position can completely and accurately receive the data sent by the terrestrial access network device.

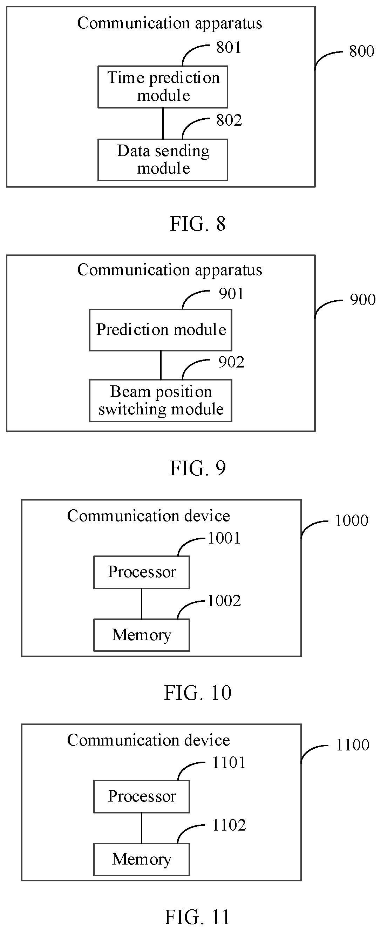

Based on a same design concept as the foregoing method embodiments, an embodiment of this application further provides a communication apparatus. The communication apparatus may be applied to the foregoing terrestrial access network device, and is configured to implement functions of the foregoing method embodiments. Therefore, beneficial effects of the foregoing method embodiments can be implemented. As shown in FIG. 8, the communication apparatus 800 may include a time prediction module 801 and a data sending module 802.

The time prediction module 801 may be configured to predict a sending moment at which target data is sent to a target terminal, where the sending moment of the target data is determined based on a feeding transmission delay and a beam position switching moment of a target beam of a satellite, the feeding transmission delay is determined based on a distance between the terrestrial access network device and the satellite, the beam position switching moment is a time point at which the target beam is switched from a first beam position to a second beam position, and the target terminal is located within a terrestrial area covered by the second beam position. The data sending module 802 may be configured to transmit the target data to the target terminal through the target beam of the satellite when the sending moment arrives.

In some embodiments, the time prediction module 801 may be further configured to determine a location of the satellite based on ephemeris information of the satellite, and determine the distance between the terrestrial access network device and the satellite based on the location of the terrestrial access network device and the location of the satellite before the terrestrial access network device determines the feeding transmission delay based on the distance between the terrestrial access network device and the satellite.

In an embodiment, the data sending module 802 may be specifically configured to cache the target data in the to-be-sent data in a process of scheduling the to-be-sent data based on the specified scheduling slot, and transmit the target data to the satellite once the sending moment arrives.

In another embodiment, the data sending module 802 may be specifically configured to adjust a scheduling slot for the to-be-sent data based on the sending moment, and transmit the target data to the satellite at the sending moment of the target data based on the adjusted scheduling slot.

Functional modules in embodiments of this application may be integrated into one processor, or each of the modules may exist alone physically, or two or more modules may be integrated into one module. The foregoing integrated module may be implemented in a form of hardware, or may be implemented in a form of a software functional unit.

Based on a same design concept as the foregoing method embodiments, an embodiment of this application further provides a communication apparatus. The communication apparatus may be applied to the foregoing satellite, and is configured to implement functions of the foregoing method embodiments. Therefore, beneficial effects of the foregoing method embodiments can be implemented. As shown in FIG. 9, the communication apparatus 900 may include a prediction module 901 and a beam position switching module 902.

The prediction module 901 may be configured to predict a beam position switching moment of a target beam of a satellite. The beam position switching module 902 may be configured to switch the target beam from a first beam position to a second beam position at the beam position switching moment. The beam position switching moment is determined based on the feeding transmission delay and the sending moment of the target data. The sending moment is a moment at which the terrestrial access network device sends the target data to the satellite. The feeding transmission delay is determined based on the distance between the terrestrial access network device and the satellite. The target terminal is located within the terrestrial area covered by the second beam position.

In some embodiments, the beam position switching module 902 may be further configured to adjust a beam position switching interval of the target beam of the satellite based on the beam position switching moment.

In some embodiments, the prediction module 901 may be specifically configured to determine the distance between the terrestrial access network device and the satellite based on the location of the terrestrial access network device and the location of the satellite, determine the distance between the satellite and the reference point based on the distance between the terrestrial access network device and the satellite, and determine the feeding transmission delay based on the distance between the satellite and a reference point. The beam position switching moment is determined based on the sending moment of the target data. The sending moment of the target data is a moment at which the terrestrial access network device sends the target data to the satellite. The sending moment is determined based on a static feeding delay obtained based on the distance between the reference point and the terrestrial access network device.

Functional modules in embodiments of this application may be integrated into one processor, or each of the modules may exist alone physically, or two or more modules may be integrated into one module. The foregoing integrated module may be implemented in a form of hardware, or may be implemented in a form of a software functional unit.

Based on a same technical concept as the foregoing method embodiments, an embodiment of this application further provides a communication device. The communication device may be the terrestrial access network device 21 shown in FIG. 2, or the communication device may include the gateway 10 and the terrestrial access network device 20 shown in FIG. 1. The communication device may be configured to implement the functions in the foregoing method embodiments shown in FIG. 4. Therefore, beneficial effects of the foregoing method embodiments can be implemented.

In some embodiments, a structure of the communication device 1000 may be as shown in FIG. 10, including a processor 1001 and a memory 1002 connected to the processor 1001. The processor 1001 and the memory 1002 may be connected to each other through a bus. The processor 1001 may be a general purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified as an address bus, a data bus, a control bus, and the like.

The memory 1002 may be configured to store a software program and a module. The processor 1001 runs the software program and the module that are stored in the memory 1002, to perform various function applications and data processing of the communication device 1000, for example, the communication method provided in embodiments of this application.

The memory 1002 may mainly include a program storage area and a data storage area. The program storage area may store an operating system, an application program of at least one application, and the like. The data storage area may be configured to store user data and the like. In addition, the memory 1002 may include a high-speed random access memory, and may further include a non-volatile memory, such as at least one magnetic disk storage device, a flash memory, or another volatile solid-state storage device.

The processor 1001 in the communication device 1000 is configured to run computer instructions or program stored in the memory 1002, to perform a function in any one of the foregoing method embodiments.

In some embodiments, the processor 1001 may include one or more processing units. Different processing units may be devices independent of each other, or may be integrated in one or more processors. The processor 1001 may further include a controller. The controller may generate an operation control signal based on instruction operation code and a timing signal, and control obtaining and execution of instructions.

In an embodiment, the communication device 1000 may further include a communication module, and the communication module is configured to communicate with another device in a network.

It may be understood that the structure shown in this embodiment of this application does not constitute a specific limitation on a network device. In some other embodiments of this application, a chip may include more or fewer components than those shown in the figure, some merged components, some split components, or different component arrangements. The components shown in the figure may be implemented by hardware, software, or a combination of software and hardware.

Based on a same technical concept as the foregoing method embodiments, an embodiment of this application further provides a communication device. The communication device may be the satellite 30 shown in FIG. 1, or the satellite may include the satellite 31 shown in FIG. 2. The satellite may be configured to implement the functions in the foregoing method embodiments shown in FIG. 6. Therefore, beneficial effects of the foregoing method embodiments can be implemented.

In some embodiments, a structure of the communication device 1100 may be as shown in FIG. 11, including a processor 1101 and a memory 1102 connected to the processor 1101. The processor 1101 and the memory 1102 may be connected to each other through a bus. The processor 1101 may be a general purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified as an address bus, a data bus, a control bus, and the like.

The memory 1102 may be configured to store a software program and a module. The processor 1101 runs the software program and the module that are stored in the memory 1102, to perform various function applications and data processing of the communication device 1100, for example, the communication method provided in embodiments of this application.

The memory 1102 may mainly include a program storage area and a data storage area. The program storage area may store an operating system, an application program of at least one application, and the like. The data storage area may be configured to store user data and the like. In addition, the memory 1102 may include a high-speed random access memory, and may further include a non-volatile memory, such as at least one magnetic disk storage device, a flash memory, or another volatile solid-state storage device.

The processor 1101 in the communication device 1100 is configured to run computer instructions or program stored in the memory 1102, to perform a function in any one of the foregoing method embodiments.

In some embodiments, the processor 1101 may include one or more processing units. Different processing units may be devices independent of each other, or may be integrated in one or more processors. The processor 1101 may further include a controller. The controller may generate an operation control signal based on instruction operation code and a timing signal, and control obtaining and execution of instructions.

In an embodiment, the communication device 1100 may further include a communication module, and the communication module is configured to communicate with another device in a network.

It may be understood that the structure shown in this embodiment of this application does not constitute a specific limitation on a network device. In some other embodiments of this application, a chip may include more or fewer components than those shown in the figure, some merged components, some split components, or different component arrangements. The components shown in the figure may be implemented by hardware, software, or a combination of software and hardware.

Based on a same technical concept as the foregoing method embodiments, an embodiment of this application further provides a communication system. The communication system may be the communication system shown in FIG. 1 or FIG. 2, and the communication system may include a terrestrial access network device and a satellite. In some embodiments, the terrestrial access network device may adopt the communication device shown in FIG. 10, and the satellite may adopt a conventional satellite. The terrestrial access network device may adjust the sending moment of the target data based on the feeding transmission delay and the beam position switching moment of the beam of the satellite that are determined in real time, and transmit the target data to the satellite at the sending moment of the target data, so that an occasion on which the target data arrives at the satellite matches the beam position switching moment of the beam of the satellite. After the target data arrives at the satellite, the beam of the satellite may be switched from the first beam position to the second beam position, so that target terminal within coverage of the first beam position and the second beam position can completely and accurately receive the data sent by the terrestrial access network device. In some other embodiments, the satellite may adopt the communication device shown in FIG. 11, and the terrestrial access network device may adopt a conventional terrestrial access network device. The satellite may adjust a beam position switching moment of a beam of the satellite in real time based on a feeding transmission delay that changes in real time, so that an occasion on which the target data arrives at the satellite matches an occasion on which the satellite beam is switched. After the target data arrives at the satellite, the beam of the satellite may be switched from the first beam position to the second beam position, so that the target terminal within the coverage of the second beam position can completely and accurately receive the data sent by the terrestrial access network device.

An embodiment of this application further provides a computer program product, including computer-executable instructions. In an embodiment, the computer-executable instructions are used to enable a computer to perform functions in the foregoing method embodiments.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform functions in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device such as a server or a data center integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid state disk.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. In addition, the terms "include", "have", and any variant thereof are intended to cover non-exclusive inclusion, for example, include a series of steps or units. A method, a system, a product, or a device is not necessarily limited to those steps or units expressly listed, but may include another step or unit not expressly listed or inherent to such a process, a method, a product, or a device.

Although this application is described with reference to the specific features and embodiments thereof, apparently, various modifications and combinations may be made to this application without departing from the spirit and scope of this application. Correspondingly, this specification and the accompanying drawings are merely example descriptions of solutions defined by the appended claims, and are deemed to have covered any and all modifications, variations, combinations, or equivalents that fall within the scope of this application.

Apparently, a person skilled in the art can make various modifications and variations to this application without departing from the scope of this application. In this way, if the modifications and variations made to embodiments of this application fall within the scope of the claims of this application and their equivalent technologies, this application is also intended to include these modifications and variations.

## Claims

1. A communication method, applied to a terrestrial access network device, wherein the method comprises:
predicting a sending moment for sending target data to a target terminal, wherein the sending moment is determined based on a feeding transmission delay and a beam position switching moment of a target beam of a satellite, the feeding transmission delay is determined based on a distance between the terrestrial access network device and the satellite, the beam position switching moment is a time point at which the target beam is switched from a first beam position to a second beam position, and the target terminal is located within a terrestrial area covered by the first beam position or the second beam position; and
transmitting the target data to the target terminal through the target beam of the satellite when the sending moment arrives.

2. The method according to claim 1, wherein the distance between the terrestrial access network device and the satellite is determined based on a location of the terrestrial access network device and a location of the satellite.

3. The method according to claim 1 or 2, wherein before the transmitting the target data to the target terminal through the target beam of the satellite when the sending moment arrives, the method further comprises:
scheduling to-be-sent data in a specified scheduling slot, and caching the target data in the to-be-sent data.

4. The method according to claim 1 or 2, wherein before the transmitting the target data to the target terminal through the target beam of the satellite when the sending moment arrives, the method further comprises:
adjusting a scheduling slot for to-be-sent data based on the sending moment, wherein the to-be-sent data comprises the target data.

5. A communication method, applied to a satellite, wherein the method comprises:
predicting a beam position switching moment of a target beam of the satellite, wherein the beam position switching moment is determined based on a feeding transmission delay and an obtained sending moment at which a terrestrial access network device sends target data to a target terminal, and the feeding transmission delay is determined based on a distance between the terrestrial access network device and the satellite; and
switching the target beam from a first beam position to a second beam position at the beam position switching moment, wherein the target terminal is located within a terrestrial area covered by the first beam position or the second beam position.

6. The method according to claim 5, wherein before the switching the target beam from the first beam position to the second beam position at the beam position switching moment, the method further comprises:
adjusting a beam position switching interval of the target beam of the satellite based on the beam position switching moment.

7. The method according to claim 5 or 6, wherein a reference point is disposed between the terrestrial access network device and the satellite, a distance between the reference point and the terrestrial access network device is fixed, and the feeding transmission delay is determined based on a distance between the satellite and the reference point.

8. A communication apparatus, comprising a module for performing the method according to any one of claims 1 to 4.

9. A communication apparatus, comprising a module for performing the method according to any one of claims 5 to 7.

10. A communication device, comprising a memory and a processor, wherein the memory stores a computer program, and the processor is configured to execute the computer program stored in the memory, to implement the method according to any one of claims 1 to 4.

11. A communication device, comprising a memory and a processor, wherein the memory stores a computer program, and the processor is configured to execute the computer program stored in the memory, to implement the method according to any one of claims 5 to 7.

12. A communication system, wherein the communication system comprises a terrestrial access network device and a satellite, the terrestrial access network device is configured to perform the method according to any one of claims 1 to 4, or the satellite is configured to perform the method according to any one of claims 5 to 7.

13. A computer-readable storage medium, storing computer-executable instructions, wherein the computer-executable instructions are used to enable a computer to perform the method according to any one of claims 1 to 4, or perform the method according to any one of claims 5 to 7.
